# EUROPÄISCHE PATENTSCHRIFT

(11) **EP 2 572 414 B1**
(45) Veröffentlichungstag und Bekanntmachung des Hinweises auf die Patenterteilung: **02.11.2016**
(21) Anmeldenummer: 11757242.0
(22) Anmeldetag: 05.09.2011
(51) Int. Cl.: H02B 1/06

(54) **BLENDRAHMEN**
WINDOW FRAME
CADRE DE FENÊTRE

(30) Priorität: 30.09.2010 DE 102010041724
(43) Veröffentlichungstag der Anmeldung: 27.03.2013
(73) Patentinhaber: Siemens Aktiengesellschaft, 80333 München (DE)
(72) Erfinder: BAUMANN, Mathias, 90513 Zirndorf (DE); CZEKAY, Stephan, 92361 Berngau (DE); FREIMUTH, Michael, 92242 Hirschau (DE); KRIEGER, Harald, 91284 Neuhaus (DE)
(86) Internationale Anmeldenummer: PCT/EP2011/065292
(87) Internationale Veröffentlichungsnummer: WO 2012/041653

(56) Entgegenhaltungen:
- EP-A1- 1 806 815
- GB-A- 2 361 583
- US-A- 3 075 061
- US-A1- 2003 150 636
- US-B1- 6 435 631

## Beschreibung

Die Erfindung betrifft einen Blendrahmen für ein Schaltgerät, insbesondere für die Bedienfront eines Schaltgerätes, an einer Durchtrittsöffnung eines Schaltschrankes, z. B. in einer Tür eines Schaltschrankes. Darüber hinaus betrifft die Erfindung ein Baukastensystem für Blendrahmen sowie ein Verfahren zur Montage eines Blendrahmens aus Elementen des Baukastensystems.

Bei dem Betrieb von Schaltgeräten, insbesondere von Leistungsschaltern, wird es angestrebt, die Öffnungen zur Schaltanlage, z. B. die Türen der Schaltanlage, stets geschlossen zu halten, um eine größtmögliche Sicherheit für das Bedienungspersonal zu erreichen. Zugleich ist es erforderlich, dass die Bedienungselemente in allen vorgesehenen Stellungen des Schaltgerätes zugänglich sind. Der Blendrahmen, der auch als Abdeckrahmen oder Dichtungsrahmen bezeichnet werden kann, hat dabei die Aufgabe, sowohl das Bedienungspersonal vor Einflüssen aus dem Innenraum der Schaltanlage, als auch umgekehrt das Schaltgerät gegen Einflüsse von außen zu schützen.

Für Leistungsschalter, insbesondere Kompaktleistungsschalter (MCCB, Molded Case Circuit Breaker) werden üblicherweise Blendrahmen verwendet, die einen Grundrahmen mit daran befestigter Dichtlippe aufweisen, wobei der Grundrahmen aus einem einzigen Bauteil besteht. Wegen der Vielzahl der verschiedenen Schaltergrößen, Schalterbauarten und des verschiedenen Schalterzubehörs werden in der Praxis eine große Anzahl verschiedener Blendrahmen benötigt. Daher ist der Herstellungs-und Lagerhaltungsaufwand hoch.
Von Nachteil ist weiterhin, dass die Blendrahmen größtenteils konstruktiv und werkzeugtechnisch aufwendig aufgebaut und teilweise sogar mit einer aufwendig angebrachten Gummilippe versehen sind.

Nachteilig ist außerdem, dass die Befestigung der bekannten. Blendrahmens in einem Türausschnitt häufig nur mit Hilfe spezieller Werkzeuge möglich ist.

In der GB 2 361 583 A wird ein modularer Blendrahmen offenbart, der zwei Halbelemehte umfasst, die zusammen eine offnung für beispielsweise einen Schalter bilden, und bei denen die gebildet Offnung variable in ihrer Größe ausgestallet ist.

Eine Aufgabe, der Erfindung ist es, einen solchen Blendrahmen wesentlich zu vereinfachen.

Erfindungsgemäß wird hierzu vorgeschlagen, den Blendrahmen modular auszubilden derart, dass er aus paarweise zu verwendenden Rahmensegmenten zusammensetzbar ist. Das Zusammensetzen erfolgt dabei bedarfsweise zur Bereitstellung einer benötigten Blendrahmengröße. Die Blendrahmengröße richtet sich im Wesentliche nach der Art und Anzahl der zu umrahmenden Schaltgeräte, wobei ein von dem Blendrahmen eingefassates Schaltgerät im Sinne der Erfindung auch ein an dem eigentlichen Schaltgerät an- oder aufgebautes Zubehör umfassen kann.

Mit der Erfindung ist es nun möglich, eihe Vielzahl. verchiedener Blendrahmen mit einemn Minimum an Bauteilen bereitzustellen. Durch die vorgeschlagene Modulbauweise wird mit anderen Worten der Aufwand bei der Herstellung und Lagerhaltung verringert. Vor allem werden die Werkzeugkosten zur Herstellung der Blendrahmen deutlich gesenkt, da keine individuell auf einzelne. Blendrahmenty pen zugeschnittene Herstellungswerkzeuge mehr erforderlich sind. Eine aufwendige Lagerhaltung verschiedenster Blendrahmengrößen entfällt.

Das modulare Montageprinzip ermöglicht es, mit einer geringen Anzahl von einzelnen Rahmensegmenten unterschiedlicher Large, die bedarfsweise miteinander kombiniert werden, auf besonderes einfache Art Blendrahmen in einer Vielzahl verschiedener Größen bereitzustellen.

Da die einzelnen Rahmensegmente klein, einfach aufgebaut und aufgrund einer entsprechenden Materialauswahl vergleichsweise verzugsarm sind, sind die Werkzeugkosten für die Herstellung diester Rahmensegmente vergleichsweise niedrig.

Da sämtliche Blendrahmen aus einem Baukastensystem identischer bzw. nahezu identischer Rahmensegmenten aufgebaut werden, ergibt sich insgesamt ein einheitliches und homogenes Erscheinungsbild. Durch den Einsatz entsprechender Materialien können zudem Rahmensegmente verschiedener Farben miteinander kombiniert werden.

Die Aufgabe wird auch durch ein Baukastensystem für Blendrahmen gelöst, welches sich dadurch auszeichnet, dass das Baukastensystem paarweise zu verwendende Rahmensegmente umfasst, aus denen der Blendrahmen bedarfsweise zur Bereitstellung einer benötigten Blendrahmengröße zusammensetzbar ist. Die Aufgabe wird schließlich auch durch ein Verfahren zur Montage eines Blendrahmens gelöst, bei dem mit Hilfe eines solchen Baukastensystems ein Blendrahmen, wie oben angegeben, zusammengesetzt wird.

Nachfolgend wird die Erfindung zumeist am Beispiel einer Durchtrittsöffnung in einer Schaltschranktür beschrieben. Der Blendrahmen kann jedoch für beliebige Durchtrittsöffnungen des Schaltschrankes verwendet werden. Unter einem Schaltschrank im Sinne der Erfindung wird dabei ein Gehäuse für wenigstens ein Schaltgerät verstanden, wobei es weder auf das Gehäusematerial, noch auf die Größe des Gehäuses oder auf die Funktion des Schaltgerätes ankommt. Schaltschränke im Sinne der Erfindung sind daher beispielsweise Isolierstoffgehäuse sowie Verteiler. Die Erfindung wird nachfolgend exemplarisch anhand eines Schaltschrankes beschrieben.

Vorteilhafte Ausführungsformen der Erfindung sind in den Unteransprüchen angegeben.

Besonders vorteilhaft ist es, wenn jeweils gegenüberliegende Rahmensegmente identisch ausgebildet sind. Dies ermöglicht eine besonders universelle Kombination der Rahmensegmente miteinander. Im Zusammenhang damit hatte sich als besonders vorteilhaft erwiesen, jedes Rahmensegment mit zwei voneinander verschiedenen Verbindungselementen auszustatten dergestalt, dass an den Verbindungsbereichen benachbarter Rahmensegmente unterschiedliche Verbindungselemente unter Ausbildung einer mechanischen Verbindung zusammenwirken.

Eine besonders einfache Montage ohne Werkzeug ist dabei möglich, wenn die Verbindungselemente eine Schwalbenschwanzverbindung ausbilden, mit anderen Worten das eine Verbindungselement eines Rahmensegments als eine schwalbenschwanzförmige Aufnahmenut und das jeweils andere Verbindungselement als eine entsprechend komplementär ausgebildete Verbindungsnase ausgebildet ist. Durch die Schwalbenschwanzform wird eine besonders sichere Verbindung erreicht. Alternativ zu der Schwalbenschwanzverbindung kann auch eine beliebige andere Verbindung verwendet werden, sofern diese durch zueinander komplementär ausgebildete Verbindungselemente gebildet wird. So kann beispielweise die Verbindungsnase eine T-Form oder die Form eines Puzzlezahnes aufweisen.

Mit Hilfe dieses aus einzelnen Rahmensegmenten zusammengesetzten Modulsystems ist es möglich, Rahmensegmente derart aneinandergereiht miteinander zu verbinden, dass der Blendrahmen mehrere ohne Zwischenraum seitlich aneinanderliegende Schaltgeräte einfasst. Mit anderen Worten ist eine "dicht an dicht"-Bauweise (side-by-side) von Schaltgeräten ohne Zwischenräume möglich. Die bei den bisher aus dem Stand der Technik bekannten Blendrahmen vorhandene Beschränkung, dass ein Blendrahmen immer nur ein alleinstehendes Schaltgerät einrahmt, da zu seitlich anliegenden Schaltgeräten wegen den Blendrahmenwanddicken immer ein Mindestabstand eingehalten werden musste, wird mit somit beseitigt, da die Rahmenzwischenwände entfallen.

Die Verbindung des Blendrahmens in der Durchtrittsöffnung der Schaltschranktür erfolgt mit Hilfe von Federbügeln. Die Federbügel sind dabei vorzugsweise derart ausgebildet, dass die Montage ebenfalls werkzeuglos erfolgen kann. Hierzu kann jedem einzelnen Rahmensegment mindestens ein Federbügel zugeordnet werden, wobei die Federbügel das jeweilige Rahmensegment auf die Außenseite der Schaltschrankwand drückt, indem der Federbügel durch die Durchtrittsöffnung hindurchtretend die Schaltschrankwand hintergreift.

Durch die damit erreichte "schwimmende" Befestigung des Blendrahmens in der Durchtrittsöffnung wird ein Toleranzausgleichselement, beispielsweise in Form einer Gummilippe oder dergleichen, nicht mehr benötigt. Die schwimmende Befestigung erlaubt eine Montagetoleranz von mehreren Millimetern. Die Schutzart IP40 kann dennoch erreicht werden. Von Vorteil ist es zudem, dass zur Aufrechterhaltung der Schutzart IP40 für Leer- und Reservefelder in den Rahmen eine Blindabdeckung (Blende) eingesetzt werden kann.

Als besonders vorteilhaft hat es sich in diesem Zusammenhang erwiesen, wenn die Federbügel an den Blendrahmensegmenten festgelegt sind, zu welchem Zweck jedes Rahmensegment wenigstens eine Aufnahmetasche für den Federbügel aufweist. Dabei kann bei Verwendung mehrerer Federbügel für ein Rahmensegment jedem Federbügel eine Aufnahmetasche zugeordnet sein. Es können aber auch dann mehrere Aufnahmtaschen an einem Rahmensegment vorgesehen werden, wenn jedes Rahmensegment nur mit einem einzigen Federbügel befestigt wird, so dass die Zuordnung des einen Federbügels zu einer bestimmten Aufnahmetasche entsprechend der baulichen Gegebenheiten erfolgen kann, wodurch eine besonders universelle Befestigung an verschiedenenartigsten Durchtrittsöffnungen möglich ist.

Die Montage gestaltet sich besonders einfach und dennoch sicher, wenn der Federbügel nach Art einer U-förmigen Befestigungsklammer ausgebildet ist, die mit dem U-Grund verbundenen U-Schenkel also mit vergleichsweise breiten Anlageflächen versehen sind. Dadurch kann der eine U-Schenkel in der Aufnahmetasche des Rahmensegments und der andere U-Schenkel an der Innenseite der Schaltschrankwand flächig anliegen und die für eine Befestigung des Blendrahmens in der Durchtrittsöffnung erforderliche Klemmkraft besonders sicher aufbringen.

Werden U-förmige Federbügel verwendet, weist die Aufnahmetasche einen parallel zu der Schaltschrankwand verlaufenden Aufnahmebereich auf, in dem der dem Rahmensegment zugeordnete U-Schenkel einliegt. Alternativ dazu kann auch eine Aufnahmetasche in Gestalt einer vorzugsweise senkrecht zu der Schaltschrankwand verlaufenden einfachen Aufnahmenut vorgesehen sein. In diesem Fall weist der Federbügel eine L-Form auf, wobei der eine, zur Befestigung in der Aufnahmetasche vorgesehene flache L-Schenkel zumindest einseitig mit Widerhaken oder Rastzähnen oder dergleichen versehen ist und zur Montage an dem Rahmensegment einfach in die Aufnahmenut eingeschoben wird, während der andere L-Schenkel wie bei dem U-förmigen Federbügel im montierten Zustand flächig an der Schaltschrankwand anliegt.

Durch die Befestigung mit Hilfe der Federbügel ist eine variable Montage an Schaltschranktüren mit unterschiedlichen Dicken möglich. Mit anderen Worten können die Blendrahmen in Schaltschränken mit unterschiedlichen Blechstärken, beispielsweise von 0,5 mm bis 5 mm, eingebaut werden.

Ausführungsbeispiele der Erfindung werden nachfolgend anhand der Zeichnungen näher erläutert. Hierbei zeigen:
- FIG 1: eine perspektivische Ansicht eines Schaltschrankes mit geöffneter Schaltschranktür,
- FIG 2: eine eingerahmte Bedienfront eines Schaltgerätes bei geschlossener Tür in Schnittdarstellung,
- FIG 3: einen Blendrahmen für einen Leistungsschalter in Explosionsdarstellung (Vorderansicht),
- FIG 4: einen Blendrahmen für einen Leistungsschalter in Explosionsdarstellung (Rückansicht),
- FIG 5: einen montierten Blendrahmen für einen Leistungsschalter (Vorderansicht),
- FIG 6: einen montierten Blendrahmen für einen Leistungsschalter (Rückansicht),
- FIG 7: einen montierten Blendrahmen für drei nebeneinander angeordnete Leistungsschalter (Vorderansicht),
- FIG 8: einen montierten Blendrahmen für drei nebeneinander angeordnete Leistungsschalter (Rückansicht).

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Die Erfindung wird am Beispiel eines Schaltschrankes 1 erläutert,' in dem ein Leistungsschalter 2 mit Kipphebel angeordnet ist. Bei geschlossener Schaltschranktür 3 wird die durch eine Durchtrittsöffnung 4 hindurchragende Bedienfront 5 des Leistungsschalters 2 von dem erfindungsgemäßen Rahmen 6 eingefasst.

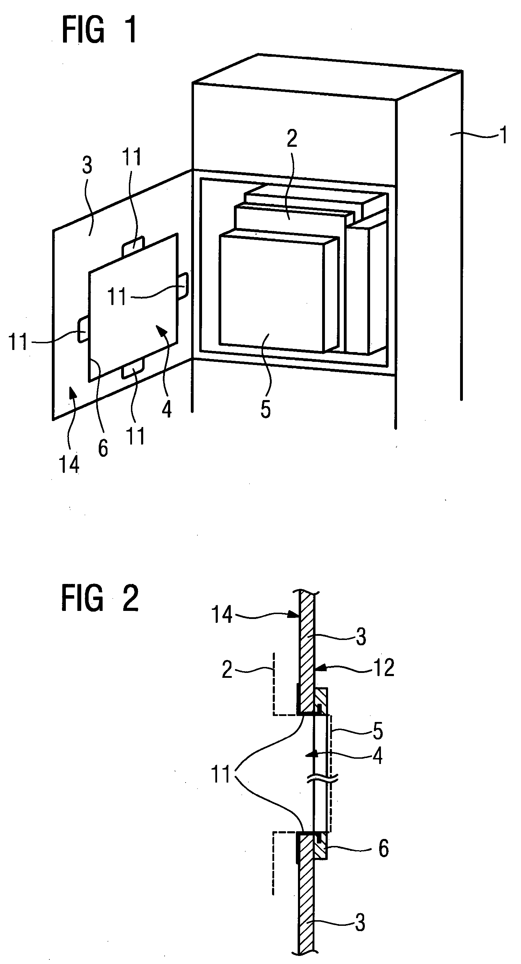

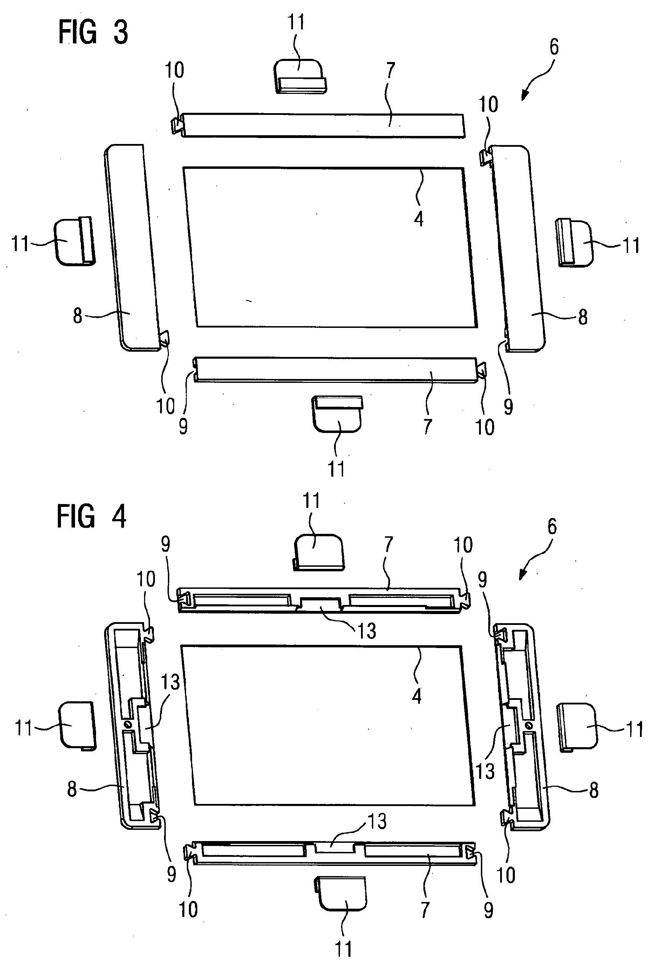

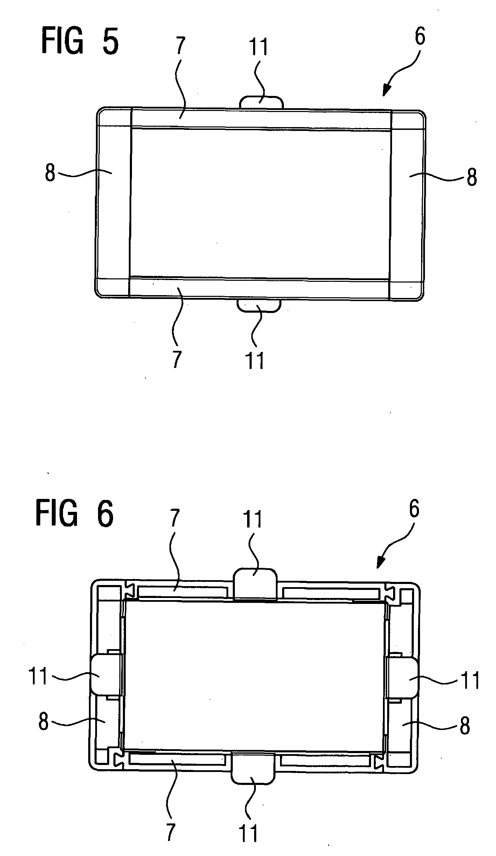

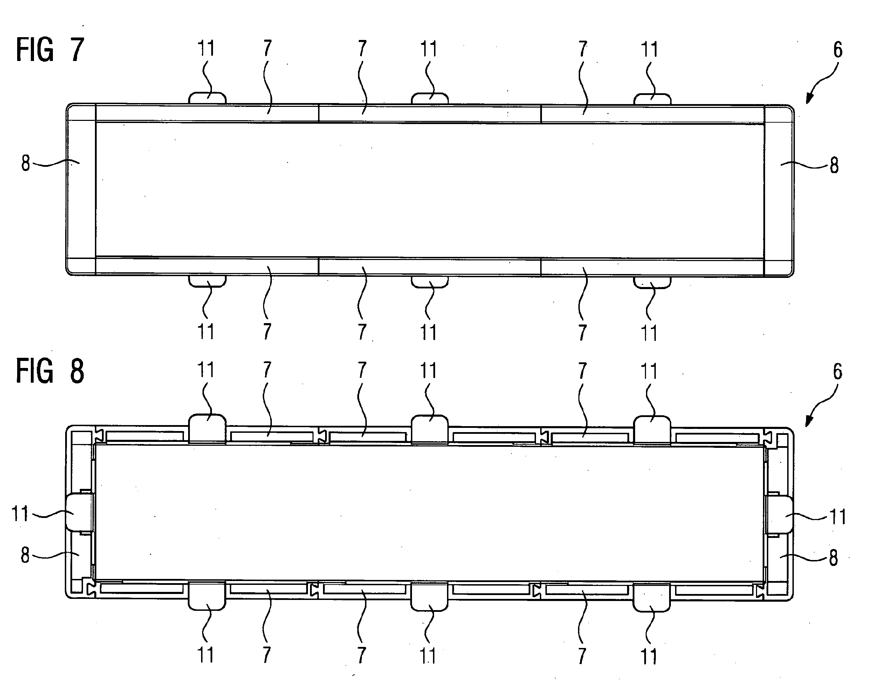

Der Rahmen 6 ist modular ausgebildet und ist aus paarweise zu verwendenden Rahmensegmenten 7, 8 zusammengesetzt, so dass bedarfsweise verschiedene Blendrahmengrößen bereitgestellt werden können. In dem gezeigten Beispiel ist ein Rahmen 6 für einen Leistungsschalter (Fig. 1 bis 6) bzw. für drei nebeneinanderliegende Leistungsschalter (Fig. 7 und 8) ausgeführt, wobei in dem zuletzt genannten Fall die Rahmensegmente 7, 8 derart miteinander verbunden sind, dass der Rahmen 6 mehrere, ohne Zwischenraum seitlich aneinanderliegende Schaltgeräte (nicht dargestellt) einrahmt.

Jeweils gegenüberliegende Rahmensegmente eines Rahmens 6 sind identisch. Der Rahmen 6 weist stets nur zwei Arten von Segmenten 7, 8 auf, und zwar Längsseiten-Segmente 7 und Querseiten-Segmente 8. Der Rahmen für einen einzelnen Leistungsschalter 2 üblicher Bauart ist aus zwei identischen Längsseiten-Segmente 7 und zwei identischen Querseiten-Segmente 8 aufgebaut. An jedem Rahmensegment 7, 8 ist endseitig ein erstes Verbindungselement 9 in Gestalt einer schwalbenschwanzförmigen Aufnahmenut und an der gegenüberliegenden Endseite ein zweites Verbindungselement 10 in Gestalt einer entsprechend komplementär ausgebildeten Verbindungsnase vorgesehen. Bei der Montage der einzelnen Rahmensegmente 7, 8 sind jeweils ein erstes Verbindungselement 9 eines Rahmensegmentes 7, 8 mit einem zweiten Verbindungselement 10 eines benachbarten Rahmensegmentes 7, 8 verbindbar, wobei jeweils ein erstes Verbindungselement 9 und ein zweites Verbindungselement 10 gemeinsam eine Schwalbenschwanzverbindung ausbilden. Dabei sind die Verbindungselemente 9, 10 an bzw. in den Rahmensegmenten 7, 8 derart angeordnet, dass an einem Ende eines Längsseiten-Segmentes 7 entweder ein weiteres Längsseiten-Segment 7 oder aber ein Querseiten-Segment 8 anbringbar ist. Gleiches gilt für das gegenüberliegende Ende des Längsseiten-Segmentes 7.

Jedem Rahmensegment 7, 8 ist in dem dargestellten Ausführungsbeispiel ein einziger Federbügel 11 zugeordnet, mit dessen Hilfe das an der Außenseite 12 der Tür 3 angebrachte Rahmensegment 7, 8 in der Durchtrittsöffnung 4 schwimmend befestigt wird, indem der an dem Rahmensegment 7, 8 festgelegte Federbügel 11 durch die Durchtrittsöffnung 4 hindurchtretend die Schaltschranktür 3 hintergreift. Hierzu weist jedes Rahmensegment 7, 8 eine mittig angeordnete Aufnahmetasche 13 zum Festlegen des Federbügels 11 an dem Rahmensegment 7, 8 auf.

Der Federbügel 11 ist nach Art einer U-förmigen Befestigungsklammer ausgebildet, wobei der kürzere U-Schenkel in der Aufnahmetasche 13 des jeweiligen Rahmensegments 7, 8 und der längerer U-Schenkel an der Innenseite 14 der Schaltschranktür 3 flächig anliegt.

## Patentansprüche

1. Blendrahmen (6) für ein Schaltgerät (2) an einer Durchtrittsöffenung (4) eines Schaltschrankes (1), wobei der Blendrahmen (6) modular ausgebildet und aus paarweise zu verwendenden Rahmensegmenten (7,8) bedarfsweise zur Bereitstellung einer benötigten Blendrahmengroße zusammensetzbar ist,
**dadurch gekennzeichnet,** das
jedem Rahmensegmente (7, 8) mindestens ein Federbügel (11) zugeordnet ist, mit dessen Hilfe das an der Außenseite (12) der Schaltschrankwand (3) angebrachte Blendrahmensegment (7, 8) in der Durchtrittsöffnung (4) schwimmend befestigt wird, indem der an dem Blendrahmensegment (7, 8) festgelegte Federbügel. (11) durch die Durchtrittsöffnung (4) hindurchtretend die Schaltschrankwand (3) hintergreift .

2. Blendrahmen (6) nach Anspruch 1,
**dadurch gekennzeichnet, dass** jeweils gegenüberliegende Rahmensegmente (7; 8) identisch sind.

3. Blendrahmen (6) nach Anspruch 1 oder 2,
**dadurch gekennzeichnet, dass**
jedes Rahmensegment (7, 8) ein erstes Verbindungselement (9) und ein zweites, von dem ersten Verbindungselement (9) verschiedenes Verbindungselement (10) auweist dergestalt, dass jeweils ein erstes Verbindungselement (9) eines Rahmensegmentes (7, 8,) mit einem zweiten Verbindungselement (10) eines benachbarten Rahmensegmentes (7, 8) verbindbar ist..

4. Blendrahmen (6) nach einem der Ansprüche 1 bis 3,
**dadurch gekennzeichnet, dass**
die Rahmensegmente (7, 8) derart miteinander verbunden sind, dass der Blendrahmen (6) mehrere, ohne Zwischenraum seitlich aneinanderliegende Schaltgeräte (2) einrahmt.

5. Blendrahmen (6) nach einem der Ansprüche 1 bis 4,
**dadurch gekennzeichnet, dass** jedes Rahmerisegment (7, 8) mindestens eine Aufnahmetasche (13) zum Festlagen des Federbügels (11) an dem Rahmensegment (7, 8) aufweist.

6. Blendrahmen (6) nach einem der Ansprüche 1 bis 5,
**daduarch gekennzeichhet,** dass
Leer- oder Reservefelder durch eine Blende geschlossen werden könnten.

7. Baukastensystem für Blendrahmen (6) nach einem der vorherigen Ansprüche für ein Schaltgerät (2) an einer Durchtrittsöffnung (4) eines Schaltschrankes (1),
**dadurch gekennzeichnet, dass**
das Baukastensystem paarweise zu verwendende Rahmensegmente (7, 8) umfasst, aus denen der Blendrahmen (6) bedarfsweise zur Bereitstellung einer benötigten Blendranimengröße zusammensetzbar ist.

## Claims

1. Casing frame (6) for a switching device (2) at a passage opening (4) in a switchgear cabinet (1), wherein the casing frame (6) is of modular design and can be made up of frame segments (7, 8), which are to be used in pairs, for providing a required size of casing frame as necessary,
**characterized in that** each frame segment (7, 8) has at least one associated spring clip (11) with the aid of which the casing frame segment (7, 8) which is fitted to the outer face (12) of the switchgear cabinet wall (3) is fastened in a floating manner in the passage opening (4) by virtue of the spring clip (11) which is fixed to the casing frame segment (7, 8) engaging behind the switchgear cabinet wall (3) such that it passes through the passage opening (4).

2. Casing frame (6) according to Claim 1,
**characterized in that**
respectively opposite frame segments (7; 8) are identical.

3. Casing frame (6) according to Claim 1 or 2,
**characterized in that**
each frame segment (7, 8) has a first connecting element (9) and a second connecting element (10), which is different from the first connecting element (9), such that a first connecting element (9) of one frame segment (7, 8) can in each case be connected to a second connecting element (10) of an adjacent frame segment (7, 8).

4. Casing frame (6) according to one of Claims 1 to 3, **characterized in that**
the frame segments (7, 8) are connected to one another in such a way that the casing frame (6) frames a plurality of switching devices (2) which are laterally in contact with one another without an intermediate space.

5. Casing frame (6) according to one of Claims 1 to 4, **characterized in that**
each frame segment (7, 8) has at least one receiving pocket (13) for fixing the spring clip (11) to the frame segment (7, 8) .

6. Casing frame (6) according to one of Claims 1 to 5,
**characterized in that**
empty or reserve areas can be closed by a panel.

7. Modular system for casing frames (6) according to one of the preceding claims for a switching device (2) at a passage opening (4) in a switchgear cabinet (1),
**characterized in that**
the modular system comprises frame segments (7, 8) which are to be used in pairs and which can make up the casing frame (6) for providing a required size of casing frame as necessary.

## Revendications

1. Cadre de fenêtre (6) pour un appareil de commutation (2) à une ouverture de passage (4) d'une armoire de distribution (1), dans lequel le cadre de fenêtre (6) est modulaire et peut être composé à partir de segments de cadre (7, 8) à utiliser par paires selon les besoins pour la réalisation d'une taille de cadre de fenêtre nécessaire, **caractérisé en ce qu'**au moins un étrier à ressort (11) est associé à chaque segment de cadre (7, 8), à l'aide duquel le segment de cadre de fenêtre (7, 8) placé sur le côté extérieur (12) de la paroi d'armoire de distribution (3) est fixé de façon flottante dans l'ouverture de passage (4), du fait que l'étrier à ressort (11) fixé au segment de cadre de fenêtre (7, 8) s'accroche derrière la paroi d'armoire de distribution (3) en passant à travers l'ouverture de passage (4).

2. Cadre de fenêtre (6) selon la revendication 1, **caractérisé en ce que** des segments de cadre respectivement opposés (7, 8) sont identiques.

3. Cadre de fenêtre (6) selon la revendication 1 ou 2, **caractérisé en ce que** chaque segment de cadre (7, 8) présente un premier élément de liaison (9) et un deuxième élément de liaison (10), différent du premier élément de liaison (9), de telle manière qu'un premier élément de liaison (9) d'un segment de cadre (7, 8) puisse chaque fois être assemblé à un deuxième élément de liaison (10) d'un segment de cadre voisin (7, 8).

4. Cadre de fenêtre (6) selon l'une quelconque des revendications 1 à 3, **caractérisé en ce que** les segments de cadre (7, 8) sont assemblés l'un à l'autre de telle manière que le cadre de fenêtre (6) encadre plusieurs appareils de commutation (2) juxtaposés latéralement sans espace intermédiaire.

5. Cadre de fenêtre (6) selon l'une quelconque des revendications 1 à 4, **caractérisé en ce que** chaque segment de cadre (7, 8) présente au moins une poche de réception (13) pour la fixation de l'étrier à ressort (11) au segment de cadre (7, 8).

6. Cadre de fenêtre (6) selon l'une quelconque des revendications 1 à 5, **caractérisé en ce que** des champs vides ou de réserve peuvent être fermés par une fenêtre.

7. Système de construction modulaire pour des cadres de fenêtre (6) selon l'une quelconque des revendications précédentes pour un appareil de commutation (2) à une ouverture de passage (4) d'une armoire de distribution (1), **caractérisé en ce que** le système de construction modulaire comprend des segments de cadre (7, 8) à utiliser par paires, à partir desquels le cadre de fenêtre (6) peut être composé selon les besoins pour la réalisation d'une taille de cadre de fenêtre nécessaire.
